# EUROPÄISCHE PATENTSCHRIFT

(11) **EP 1 238 736 B1**
(45) Veröffentlichungstag und Bekanntmachung des Hinweises auf die Patenterteilung: **07.01.2009**
(21) Anmeldenummer: 02090073.4
(22) Anmeldetag: 25.02.2002
(51) Int. Cl.: B23D 79/02, B23B 25/02

(54) **Vorrichtung zum Abführen und Zerkleinern eines Spanes**
Device to evacuate and break chips
Dispositif d'évacuation et de briser de copeaux

(30) Priorität: 08.03.2001 DE 10112294
(43) Veröffentlichungstag der Anmeldung: 11.09.2002
(73) Patentinhaber: SMS Meer GmbH, 41069 Mönchengladbach (DE)
(72) Erfinder: Heimann, Bernard, Dr., 47447 Moers (DE)
(74) Vertreter: Meissner, Peter E.

(56) Entgegenhaltungen:
- EP-A- 0 600 394
- DE-A- 1 477 731
- DE-A- 2 048 260
- DE-A- 4 217 589
- DE-C- 928 683

## Beschreibung

Die Erfindung betrifft eine Vorrichtung zum Abführen und mechanischen Zerkleinern des beim spanenden Abtragen des an der äußeren Rohroberfläche eines längsnahtgeschweißten Rohres verlaufenden Schweißnahtwulstes entstehenden endlosen Spanes, (siehe z.B. DE-A-20 48 260).

Ein großer Teil der aus Metall bestehenden Rohre wird durch kontinuierliches Längsnaht-Schweißen hergestellt. Dazu wird ein Band von einem Coil abgewickelt, in mehreren Walzengerüsten zu einem runden Schlitzrohr eingeformt und an den Bandkanten verschlossen, indem man die Bandkanten auf Schweißtemperatur erwärmt und in einem Schweißgerüst so zusammengedrückt, dass sie miteinander verschweißen. Durch die dabei aufgewendete Anpresskraft wird Material nach außen gedrückt und bildet auf der inneren und äußeren Rohroberfläche einen in Längsrichtung des Rohres verlaufenden durchgehenden Schweißnahtwulst. Weil dieser Schweißnahtwulst eine unerwünschte Verdickung der Rohrwand darstellt, wird er in den meisten Fällen sowohl innen als auch außen entfernt. Bei Rohren, bei denen nur der Außendurchmesser von Bedeutung ist, bleibt der innere Schweißnahtwulst erhalten.

Zum Entfernen des inneren Wulstes werden sogenannte Innenentgrater eingesetzt, wie sie zum Beispiel durch die DE-PS 40 20 924 bekannt geworden sind; für die Entfernung des äußeren Wulstes werden Außenentgrater verwendet. Bei beiden Entgratern ist es von Vorteil, wenn die beim Schaben oder Hobeln anfallenden Späne in kurze Stücke unterteilt werden. Ein durchgehender langer Span wächst in kurzer Zeit zu einem großen Knäuel von lockerer Spanwolle an, was schlecht transportierbar ist und außerdem eine Gefahrenquelle darstellt. Kurze Späne lassen sich dagegen leicht auffangen, abtransportieren und mit hoher Dichte in Behältern sammeln.

Ein Außenentgrater für die Erzeugung eines durchgehenden Spans wird in der EP 0 888 844 dargestellt. Hier wird der Schweißnahtwulst durch ein spanabhebendes Werkzeug abgehobelt und der dabei entstehende Span in einem Behälter aufgefangen. Mittels einer Pressvorrichtung wird die Spanwolle zusammengedrückt und paketiert. Nachteilig bei dieser Lösung ist, dass der Span nicht mit Sicherheit immer in den Behälter einläuft und deshalb ständig personell überwacht werden muss, was auch gelegentliche manuelle Eingriffe beinhaltet. Außerdem wird der Pressraum beim Ausstoßen des Spanpaketes abgedeckt, d.h. es tritt eine Unterbrechung im kontinuierlichen Ablauf der Entgratvorrichtung ein.

Bei einem anderen bekannten Außenentgrater wird der Span in einen Topf eingeführt, in dem sich ein mit hoher Drehzahl rotierendes Messer befindet. Das Messer schlägt den Span gegen eine feste Schneide und zertrennt ihn dadurch. Auch hier ist kein störungsfreier Betrieb gewährleistet, weil die Zuführung des Spanes nicht jederzeit sichergestellt ist. Das Schlagmesser verursacht außerdem einen starken Lärm.

Es ist auch bekannt, den Span zu einem Coil aufzuwickeln. Hier besteht aber die Gefahr, dass der Span beim Wickeln abreißt. Durch das notwendigerweise manuelle Eingreifen zum Wiederingangsetzen des Wickelns entsteht eine Gefährdung des Bedienungspersonal.

Das Ziel der vorliegenden Erfindung ist es, eine Vorrichtung der eingangs beschriebenen Art zum Abführen und mechanischen Zerkleinern des beim Schaben oder Hobeln der Schweißnahtwulst entstehenden Spanes so zu gestalten, dass ein störungsfreies Abführen und Zerkleinern des Spanes ohne manuellen Eingriff ermöglicht wird.

Zur Lösung der Aufgabe wird eine Vorrichtung gemäß Anspruch 1 vorgeschlagen. Der Span wird also unmittelbar nach dem Abtragen zwangsweise geführt und zwar solange, bis er die Zerkleinerungsvorrichtung erreicht hat. Störungen, die einen manuellen Eingriff oder die Unterbrechung des Entgratungsprozesses zur Folge hätten, werden durch diese Maßnahme sicher vermieden. Ein Zusammenballen des Spanes zu einem wirren Knäul wird verhindert, weil der Span direkt zerkleinert wird.

In einer Ausgestaltung der Erfindung ist vorgesehen, dass die Spanführung als ein den Span zu der Zerkleinerungsvorrichtung leitendes gekrümmtes Rohr ausgebildet ist. Die Krümmung ist dabei so gewählt, dass der Span seiner natürlichen Krümmung angenähert geführt, zu der Zerkleinerungsvorrichtung geleitet wird.

In einer anderen Ausgestaltung ist vorgesehen, dass die Spanführung als eine den Span leitende und diesen eng umschließende Rinne ausgebildet ist, deren Krümmung im Raum der gewünschten Leitbahn zwischen Spanwerkzeug und Zerkleinerungsvorrichtung angepasst ist. Die Rinne hat den Vorteil, dass sie einseitig offen und bei Störungen des Entgratungsprozesses leicht zugänglich ist.

Vorzugsweise ist bei einer Ausgestaltung der Erfindung die Spanführung in der Nähe des oder am Halter für das Spanwerkzeug zum spanenden Abtragen des Schweißnahtwulstes lösbar befestigt, wobei nach einem weiteren Vorschlag der Erfindung die Spanführung zur Einstellung einer optimalen Leitbahn verstellbar befestigt ist.

Wenn nach einem weiteren Vorschlag der Erfindung vorgesehen ist, dass die Spanführung auswechselbar ist und hinsichtlich Länge und Form an die Form und dem Querschnitt des jeweils entstehenden Span anpassbar ist, so ist eine flexible Einstellung auf die jeweiligen Gegebenheiten wie Spandicke, Spanwerkstoff und auch auf die Schweißgeschwindigkeit möglich, die die Entgratungsgeschwindigkeit bestimmt, wenn der Entgratungsprozeß inline mit dem Schweißen stattfindet.

Die Spanführung kann nach der Erfindung so gestaltet werden, dass die Zerkleinerungsvorrichtung für den Span seitlich neben oder ober- bzw. unterhalb des längsnahtgeschweißten Rohres angeordnet werden kann. Dadurch wird die gesamte Maschinenausbildung vereinfacht, weil die Position der Zerkleinerungsvorrichtung flexibel den räumlichen Gegebenheiten in der Maschine anpassbar ist.
Zur sicheren Zuleitung des Spanes, insbesondere bei Verwendung einer rohrförmigen Spanführung, ist nach einem weiteren Merkmal der Erfindung vorgesehen, dass das dem Spanwerkzeug benachbarte Ende der Spanführung trichterförmig erweitert ist.

Insbesondere bei der Verwendung einer rinnenförmigen Spanführung ist es erfindungsgemäß von Vorteil, wenn das der Zerkleinerungsvorrichtung benachbarte Ende der Spanführung vor einer trichterförmigen Einlassöffnung der Zerkleinerungsvorrichtung endet.

Einen wenig lärmverursachenden Antrieb erhält man, wenn das bewegliche Schermesser von einem Hydraulikzylinder mit hin- und herbewegbarer Kolbenstange angetrieben wird.

Zusätzlich ist erfindungsgemäß die Hubzahl des beweglichen Schermessers abhängig von der Schweißgeschwindigkeit und dem Hobelspanquerschnitt einstellbar, vorzugsweise bezogen auf einen Hub in einer Richtung zwischen 0,1s und 4s. Damit ergibt sich ein staufreier Spandurchlauf unter Berücksichtigung der jeweiligen Schweißgeschwindigkeit.

Die zerkleinerten Hobelspäne sind unterhalb der Zerkleinerungsvorrichtung auffangund abführbar.

Mit der Erfindung wird eine funktionssichere und auch im automatischen Betrieb störungsfrei arbeitende Vorrichtung zum Abführen und mechanischen Zerkleinern des entstehenden Spanes geschaffen, die universell in unterschiedlichen Schweißmaschinen einsetzbar ist. Der verwendete Antrieb der Zerkleinerungsvorrichtung ist relativ leise, der Verschleiß ist durch die Verwendung gerader Messerschneiden gering, so dass, zusammen mit der Störunempfindlichkeit eine hohe Verfügbarkeit der Anlage zu erwarten ist.

Ein Ausführungsbeispiel der Erfindung ist in der Zeichnung dargestellt und wird nachfolgend beschrieben. Es zeigt:
- Fig. 1: die Spanführung an einer Zerkleinerungsvorrichtung nach der Erfindung,
- Fig. 2: eine andere erfindungsgemäße, an dem Werkzeughalter verstellbar befestigte Spanführung,
- Fig.3: die Anordnung der Zerkleinerungsvorrichtung seitlich nebem dem Rohr und
- Fig. 4: einen Querschnitt durch die Zerkleinerungsvorrichtung nach der Erfindung.

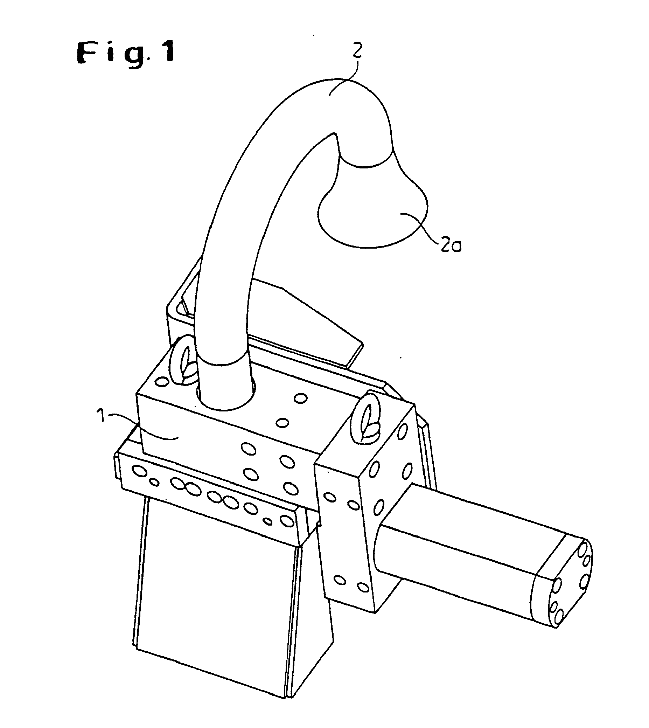

Eine Außenansicht der Zerkleinerungsvorrichtung 1 wird in der Fig. 1 gezeigt. Die trichterförmig aufgeweitete rohrförmige Spanführung 2 wird oberhalb des nicht gezeigten Rohres angebracht. Der beim Abtragen des Schweißnahtwulstes senkrecht nach oben abgeführte Span wird in die Spanführung 2 geleitet und dort um etwa 180 Grad nach unten umgelenkt, so dass der Span 5 zwangsweise in die Zerkleinerungsvorrichtung 1 gelangt.

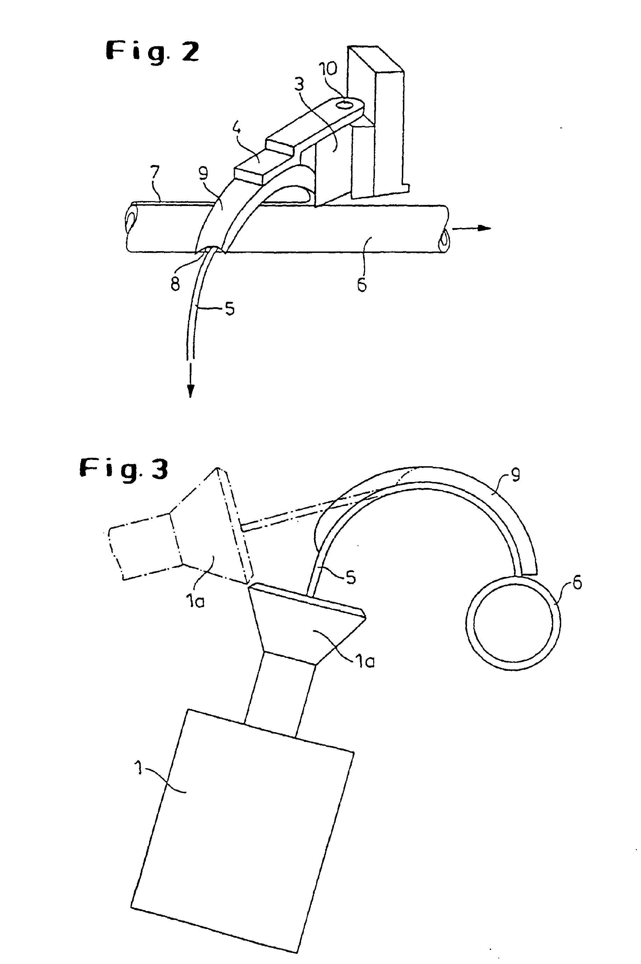

Fig. 2 zeigt ein Spanwerkzeug 3 mit einer daran angeschlossenen Spanführung 9, die den durch das Spanwerkzeug 3 vom Rohr 6 abgehobelten Span 5 des Schweißnahtwulstes 7 zur Seite ablenkt und in beispielhaft dargestellten Fall nach unten führt. Dazu ist die Spanführung als den Span 5 leitende und diesen eng umschließende, mit einer Rille 8 versehene Rinne ausgebildet. Die Halterung 4 der Spanführung 9 ist im Drehpunkt 10 um ihre senkrechte Achse schwenkbar angeordnet, so dass die Spanführung 9 verstellbar ist.

In einer Ansicht in Längsrichtung des Rohres 6 ist in Fig. 3 die Ablenkung des Spanes 5 zur Seite hin erkennbar. Im dargestellten Beispiel wird der Span 5 so abgelenkt, dass er in die leicht schräg gestellte Spanführung 2 der Zerkleinerungsvorrichtung 1 einlaufen kann. Wird das Führungsstück 9 verkürzt, um z.B. einen anderen Span abzuführen, kann die Spanführung in der gestrichelt dargestellten Position 1a installiert werden. Je nach Ausführung der Spanführung 9 sind also unterschiedliche Anordnungen der Zerkleinerungsvorrichtung 1 möglich.

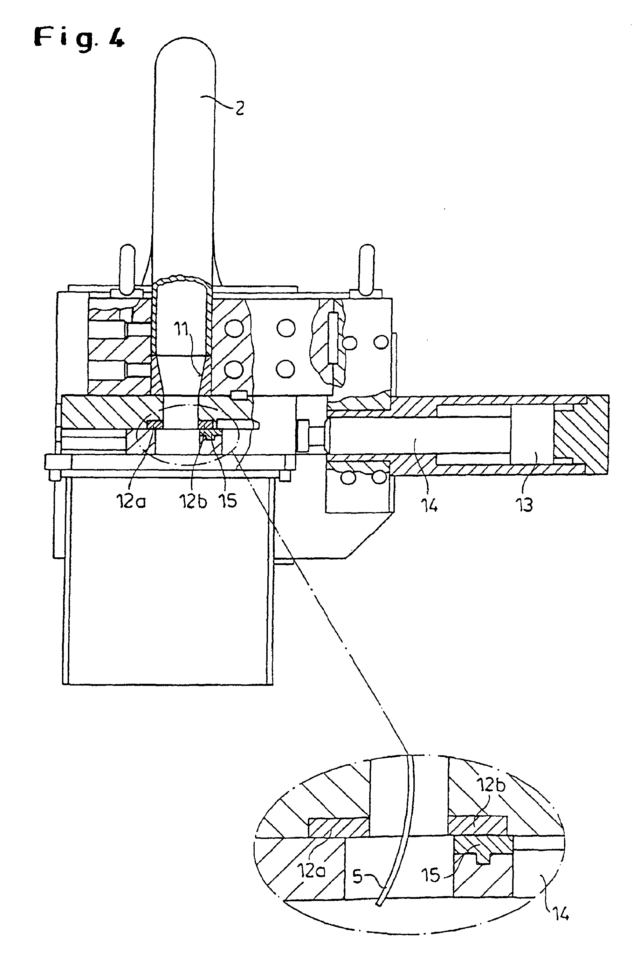

Die Fig. 4 zeigt in einem Querschnitt durch die Zerkleinerungsvorrichtung 1 deren Funktionsweise. Durch die Spanführung 2 gelangt der (nicht gezeigte) Span in den mit einem quadratischen Durchlass versehenen Trichter 11. Unterhalb des Trichters 11 sind die beiden geraden, festen Schermesser 12a und 12b angeordnet. Das durch einen Hydraulikzylinder 13 mit hin- und hergehender Kolbenstange 14 bewegte Schermesser 15 besitzt an beiden Seiten Schneiden. Es schneidet mit der vorderen Schneide auf dem Vorhub zusammen mit dem festen Schermesser 12a und auf dem Rückhub mit der hinteren Schneide zusammen mit dem Schermesser 12b. Das bewegte Schermesser 15 fährt immer über die Position der festen Schermesser 12a, 12b hinaus. Dadurch wird der Span 5 getrennt, ohne dass er sich auf dem bewegten Schermesser 15 stauen kann. Die Hubzahl des bewegten Schermessers ist zwischen 0, 1 bis 4 s einstellbar, bezogen auf einen Hub in einer Richtung, d.h. einer Zykluszeit von 0, 2 bis 8 s. Dadurch können abhängig von Spanquerschnitt und der Schweißgeschwindigkeit optimale Spanlängen eingestellt werden. Weil die festen Schermesser 12a, 12b gerade ausgebildet sind und nicht als in diesem Zusammenhang häufig eingesetzte Ringmesser, haben sie eine größere Verschleißlänge und brauchen nicht so häufig ausgewechselt zu werden.

### Positionsziffern

- 1: Zerkleinerungsvorrichtung
- 1a: trichterförmigen Einlassöffnung
- 2: Spanführung
- 2a: trichterförmigen Erweiterung der Spanführung
- 3: Spanwerkzeug
- 4: Halterung
- 5: Span
- 6: Rohr
- 7: Schweißnahtwulst
- 8: Rille
- 9: Spanführung
- 10: Drehpunkt
- 11: Trichter
- 12a: festes Schermesser
- 12b: festes Schermesser
- 13: Hydraulikzylinder
- 14: Kolbenstange
- 15: bewegtes Schermesser

## Patentansprüche

1. Vorrichtung zum Abführen und mechanischen Zerkleinern des beim spanenden Abtragen des an der äußeren Rohroberfläche eines längsnahtgeschweißten Rohres verlaufenden Schweißnahtwulstes entstehenden endlosen Spanes, wobei eine zwischen dem Spanwerkzeug (3) und der Zerkleinerungsvorrichtung (1) angeordnete, den unzerteilten Span (5) mindestens teilweise umgreifende Spanführung (2, 9) vorgesehen ist, durch die der Span (5) der Zerkleinerungsvorrichtung (1) zwangsgeführt zuleitbar ist und wobei die Spanführung (2,9) zur Einstellung einer optimalen Leitbahn verstellbar (10) angeordnet ist,
**dadurch gekennzeichnet,**
**dass** der durch die Spanführung (2. 9) zugeleitete Span (5) in der Zerkleinerungsvorrichtung (1) mittels Schermessern (12, 15) zerkleinerbar ist, wobei zwei teststehende Schermesser (12a, 12b) mit voneinander beabstandeten, sich parallel gegenüberliegenden Schneiden einen Durchlass für den Span (5) bilden und mit einem beweglichen Schermesser (15) zusammenwirken, dessen beidseitig parallel zueinander angeordnete Schneiden abwechselnd mit jeweils einer Schneide der feststehenden Schermesser (12a, 12b) zusammenwirken.

2. Vorrichtung nach Anspruch 1,
**dadurch gekennzeichnet,**
**dass** die Spanführung (2, 9) als ein den Span (5) zu der Zerkleinerungsvorrichtung (1) leitendes gekrümmtes Rohr (2) ausgebildet ist.

3. Vorrichtung nach Anspruch 1.
**dadurch gekennzeichnet,**
**dass** die Spanführung (1) als eine den Span (5) leitende und diesen eng umschließende Rinne (9) ausgebildet ist, deren Krümmung im Raum der gewünschten Leitbahn zwischen Spanwerkzeug (3) und Zerkleinerungsvorrichtung (1) angepasst ist.

4. Vorrichtung nach den Ansprüchen 1 bis 3,
**dadurch gekennzeichnet,**
**dass** die Spanführung (2, 9) am Halter für das Spanwerkzeug (3) zum spanenden Abtragen des Schweißnahtwulstes (7) lösbar befestigt ist.

5. Vorrichtung nach den Ansprüchen 1 bis 4,
**dadurch gekennzeichnet,**
**dass** die Spanführung (2, 9) auswechselbar ist und hinsichtlich Länge und Form an die Form und den Querschnitt des jeweils entstehenden Span (5) anpassbar ist.

6. Vorrichtung nach einem der Ansprüche 1 bis 5,
**dadurch gekennzeichnet,**
**dass** die Zerkleinerungsvorrichtung (1) für den Span (5) seitlich neben oder ober- bzw. unterhalb des längsnahtgeschweißten Rohres (6) angeordnet ist.

7. Vorrichtung nach einem der Ansprüche 1 bis 6,
**dadurch gekennzeichnet,**
**dass** das dem Spanwerkzeug (3) benachbarte Ende der Spanführung (2, 9) trichterförmig (2a) erweitert ist

8. Vorrichtung nach einem der Ansprüche 1 bis 7,
**dadurch gekennzeichnet,**
**dass** das der Zerkleinerungsvorrichtung (1) benachbarte Ende der Spanführung (2, 9) vor einer trichterförmigen Einlassöffnung (1 a) der Zerkleinerungsvorrichtung (1) endet.

9. Vorrichtung nach den Ansprüchen 1 bis 8,
**dadurch gekennzeichnet,**
**dass** das bewegliche Schermesser (15) von einem Hydraulikzylinder (13) mit hin- und herbewegbarer Kolbenstange (14) antreibbar ist.

10. Vorrichtung nach den Ansprüchen 1 bis 9,
**dadurch gekennzeichnet,**
**dass** die Hubzahl des beweglichen Schermessers (15) abhängig von der Schweißgeschwindigkeit und dem Hobelspanquerschnitt einstellbar ist.

11. Vorrichtung nach Anspruch 10,
**dadurch gekennzeichnet,**
**dass** die Hubzahl des beweglichen Schermessers (15) bezogen auf einen Hub in einer Richtung zwischen 0,1s und 4s einstellbar ist.

12. Vorrichtung nach den Ansprüchen 1 bis 11,
**dadurch gekennzeichnet,**
**dass** die Zerkleinerten Hobelspäne (5) unterhalb der Zerkleinerungsvorrichtung (1) auffang- und abführbar sind.

## Claims

1. A device for the removal and mechanical comminution of the continuous shaving produced during the process of machining the weld-seam bead extending along the outer surface of a tube having a longitudinal weld seam, wherein a shaving guide (2, 9) is provided which is arranged between the shaving tool (3) and the comminuting device (1) and at least partially surrounds the non-comminuted shaving (5) and by means of which the shaving (5) is feedable to the comminuting device (1) in a positively controlled manner, and wherein the shaving guide (2, 9) is adjustably (10) arranged in order to set an optimum feed path, **characterised in that** the shaving (5) fed by the shaving guide (2, 9) is comminutable in the comminuting device (1) by means of shearing blades (12, 15), wherein two fixed shearing blades (12a, 12b) with spaced cutting edges lying opposite one another in a parallel manner form a passage for the shaving (5) and co-operate with a movable shearing blade (15), the cutting edges of which are arranged parallel to one another at the two ends and co-operate alternately with a respective cutting edge of the fixed shearing blades (12a, 12b).

2. A device according to claim 1, **characterised in that** the shaving guide (2, 9) is formed as a curved pipe (2) which feeds the shaving (5) to the comminuting device (1).

3. A device according to claim 1, **characterised in that** the shaving guide (1) is formed as a channel (9) which guides and closely surrounds the shaving (5) and the curvature of which is spatially adapted to the desired feed path between the shaving tool (3) and the comminuting device (1).

4. A device according to claims 1 to 3, **characterised in that** the shaving guide (2, 9) is detachably fixed to the holder for the shaving tool (3) for the process of machining the weld-seam bead (7).

5. A device according to claims 1 to 4, **characterised in that** the shaving guide (2, 9) is exchangeable and, with respect to its length and shape, is adaptable to the shape and cross-section of the respective resulting shaving (5).

6. A device according to any one of claims 1 to 5, **characterised in that** the comminuting device (1) for the shaving (5) is arranged laterally next to or above or below the tube (6) having a longitudinal weld seam.

7. A device according to any one of claims 1 to 6, **characterised in that** the end of the shaving guide (2, 9) adjacent to the shaving tool (3) is widened in a funnel-shaped manner (2a).

8. A device according to any one of claims 1 to 7, **characterised in that** the end of the shaving guide (2, 9) adjacent to the comminuting device (1) ends in front of a funnel-shaped inlet opening (1a) of the comminuting device (1).

9. A device according to claims 1 to 8, **characterised in that** the movable shearing blade (15) is drivable by a hydraulic cylinder (13) with a reciprocating piston rod (14).

10. A device according to claims 1 to 9, **characterised in that** the number of strokes of the movable shearing blade (15) is adjustable according to the welding speed and the cross-section of the shaving.

11. A device according to claim 10, **characterised in that** the number of strokes of the movable shearing blade (15) is adjustable based on a stroke in one direction of between 0.1 s and 4 s.

12. A device according to claims 1 to 11, **characterised in that** the comminuted shavings (5) can be collected and removed underneath the comminuting device (1).

## Revendications

1. Dispositif d'évacuation et de déchiquetage mécanique du copeau sans fin formé lors de l'élimination par enlèvement de copeaux du bourrelet de cordon de soudure s'étendant à la surface extérieure d'un tube soudé en long, un guidage de copeau (2, 9) entourant au moins partiellement le copeau non déchiqueté (5), disposé entre l'outil de coupe (3) et le dispositif de déchiquetage (1), étant prévu, à travers lequel le copeau (5) du dispositif de déchiquetage (1) peut être conduit par guidage forcé et le guidage du copeau (2,9) étant disposé de manière réglable (10) afin de pouvoir régler une trajectoire de guidage optimale,
**caractérisé en ce que**
le copeau (5) conduit à travers le guidage du copeau (2, 9) peut être déchiqueté dans le dispositif de déchiquetage (1) à l'aide de couteaux (12, 15), deux couteaux fixes (12a, 12b) avec des tranchants écartés l'un de l'autre se faisant face parallèlement formant un passage pour le copeau (5) et coopérant avec un couteau mobile (15), dont les tranchants disposés parallèlement l'un à l'autre coopèrent alternativement avec un tranchant respectif des couteaux fixes (12a, 12b).

2. Dispositif suivant la revendication 1,
**caractérisé en ce que**
le guidage du copeau (2, 9) est formé comme un tube recourbé (2) guidant le copeau (5) vers le dispositif de déchiquetage (1).

3. Dispositif suivant la revendication 1,
**caractérisé en ce que**
le guidage du copeau (1) est formé comme une goulotte (9) guidant le copeau (5) et entourant étroitement celui-ci, dont la courbure dans l'espace est adaptée à la trajectoire de guidage désirée entre l'outil de coupe (3) et le dispositif de déchiquetage (1).

4. Dispositif suivant les revendications 1 à 3,
**caractérisé en ce que**
le guidage du copeau (2, 9) est fixé de manière amovible au support pour l'outil de coupe (3) pour l'élimination par enlèvement de copeaux du bourrelet de cordon de soudure (7).

5. Dispositif suivant les revendications 1 à 4,
**caractérisé en ce que**
le guidage du copeau (2, 9) est interchangeable et peut être adapté en ce qui concerne la longueur et la forme à la forme et à la section du copeau respectivement formé (5).

6. Procédé suivant l'une des revendications 1 à 5,
**caractérisé en ce que**
le dispositif de déchiquetage (1) pour le copeau (5) est disposé latéralement à côté ou au-dessus ou en dessous du tube soudé en long (6).

7. Procédé suivant l'une des revendications 1 à 6,
**caractérisé en ce que**
l'extrémité du guidage du copeau (2, 9) adjacente à l'outil de coupe (3) est élargie en forme d'entonnoir (2a).

8. Procédé suivant l'une des revendications 1 à 7,
**caractérisé en ce que**
l'extrémité du guidage du copeau (2, 9) adjacente au dispositif de déchiquetage (1) aboutit devant un orifice d'entrée en forme d'entonnoir (la) du dispositif de déchiquetage (1).

9. Dispositif suivant les revendications 1 à 8,
**caractérisé en ce que**
le couteau mobile (15) peut être entraîné par un vérin hydraulique (13) avec une tige de piston (14) pouvant effectuer un mouvement de va-et-vient.

10. Dispositif suivant les revendications 1 à 9,
**caractérisé en ce que**
le nombre de courses du couteau mobile (15) est réglable en fonction de la vitesse de soudage et de la section du copeau.

11. Dispositif suivant la revendication 10,
**caractérisé en ce que**
le nombre de courses du couteau mobile (15) est réglable entre 0,1 s et 4 s par course dans un sens.

12. Dispositif suivant les revendications 1 à 11,
**caractérisé en ce que**
les copeaux déchiquetés (5) peuvent être collectés et évacués en dessous du dispositif de déchiquetage (1).
